## Europäisches Patentamt
## European Patent Office
## Office européen des brevets

(19)

(11) Publication number: **0 064 315**
**A2**

## EUROPEAN PATENT APPLICATION

(21) Application number: **82200504.7**

(22) Date of filing: **29.04.82**

(51) Int. Cl.³: **F 16 L 21/04**

(30) Priority: **01.05.81 NL 8102173**

(43) Date of publication of application:
**10.11.82 Bulletin 82/45**

(84) Designated Contracting States:
**AT BE CH DE FR GB IT LI LU NL SE**

(71) Applicant: **WAVIN B.V.**
**251 Händellaan**
**NL-8031 EM Zwolle(NL)**

(72) Inventor: **van Dongeren, Jan Peter**
**6 Kerkweg**
**NL-7691 AL Bergentheim(NL)**

(72) Inventor: **Lodder, Bernhard**
**50 Polberg**
**NL-7772 EV Hardenburg(NL)**

(72) Inventor: **van Dijk, Berend Jan**
**13 Prinses Marijkelaan**
**NL-7776 XA Slagharen(NL)**

(74) Representative: **van der Veken, Johannes**
**Adriaan et al,**
**EXTERPATENT 3 & 4 Willem Witsenplein**
**NL-2596 BK The Hague(NL)**

(54) **A tensile resistant pipe connection and a socket provided with an end cap.**

(57) A tensile resistant pipe connection comprises a socket (6) and a male pipe part (20). The socket (6) engages at its outer side an end cap (1) having a radial inwardly extending free end (10).

In a chamber bound by the front end (9) of the socket and the free end (10) of the cap (1) there are accommodated a tensile resistance providing coupling member (4) and a sealing member (2) which sealing member (2) is most near the free end (10) of the cap (1). The outer diameter of the cap is substantially equal to the greatest outer diameter of the socket.

A second sealing member (11) may be provided between the outer side of the socket (6) and the inner side of the cap (1). The socket (6) may also be provided with a circular shoulder (19) engaging a deformable end edge (15) of the cap (1), thus providing an additional seal.

The invention also comprises a socket with end cap for use in a pipe connection of the invention.

FIG.1.

EP 0 064 315 A2

-1-

A tensi-le resistant pipe connection and a socket provided with
an end cap.

The invention relates to a tensile resistant pipe connection, at
least comprising a socket, a male pipe part, an end cap having a
radial inwardly extending end part said end cap being connected to
the socket, as well as an annular sealing member and an annular
tensile resistance providing coupling member, the annular sealing
member being nearer to the free end of the end cap than the coupling
member.

In a known tensile resistant pipe connection of this type the
socket as applied is provided with a second widening, the outer
side of same engaging an end cap for enclosing the annular sealing
member and the annular coupling member in the second widening,
said latter two members being conveniently separated from each
other by a separating ring.

Said known tensile resistant pipe connection presents the disadvantage that by applying a socket comprising a second widening
upon which an end cap is fixed, the pipe connection possesses a
relatively large outer diameter, even if male pipe parts of a
small diameter are used, which might involve problems in mounting
these pipe connections.

It is an additional disadvantage that for smaller pipe diameters
the pipe connection is easily impaired by mechanical influences, as
it is desired to either produce a relatively thin-walled wall of
the second widening, or of the end cap, so that the dimensions of

-2-

the pipe connections will not get too great.

The present invention aims to provide a tensile resistant pipe connection of the abovementioned type, which does not present these disadvantages.

This object is attained according to the invention in that the annular sealing member and annular tensile resistance providing coupling member are situated in a space bounded by the front end of the socket, and the radial inwardly extending end part of the end cap.

The use of a construction of such a type implies that the outer diameter and the dimensions of the pipe connection become considerably smaller, as the annular sealing member and the annular coupling member need no longer engage the inner wall of a second widening of a socket, but cooperate directly with the end cap, thus causing the outer diameter of the pipe connection to become considerably smaller.

According to a preferred embodiment the outer diameter of the end cap is substantially equal to the greatest outer diameter of the socket. In this way the socket is as small as possible which presents the advantage that a male pipe can be installed close to walls.

A second annular sealing member is appropriately located in a second annular chamber at the outer side of the socket.

In this manner an optimally tight tensile resistant pipe connection of a relatively small diameter is obtained if male pipe parts of a small outer diameter are used.

In a very convenient embodiment the annular outer chamber and a second annular chamber of the socket adjoin each other.

-3-

The end cap may be advantageously provided with another shoulder, which adjoins the chamber end wall of the second annular chamber.

Furthermore the end cap may be provided with an edge which engages a collar at the outer side of the socket.

In a very appropriate embodiment the front end part of the socket comprises slits, which provide a given flexibility, so as to easily deform the metal coupling member around the socket during the penetration of a male pipe part, without hampering the front end of the socket.

The invention also comprises a socket with an end cap suitable for use in a pipe connection according to the invention, whereby said end cap may be screwed, welded, glued or snapped upon the socket.

The present invention will be illustrated by means of an embodiment as shown in the drawing, wherein:

Figure 1 is a first embodiment of a tensile resistant pipe connection according to the invention;
Figure 2 is a plastics socket comprising a plastic end cap for the production of a pipe connection according to the invention of which the coupling member and the sealing member are not shown in the right-hand part of the drawing;
Figure 3 is a part of a modified embodiment of the pipe connection of fig. 2 according to the invention;
Figure 4 is still another modified embodiment of a pipe connection according to the invention, the socket consisting of plastics and the end cap of metal, and
Figure 5 is a socket applied in a pipe connection according to the invention.

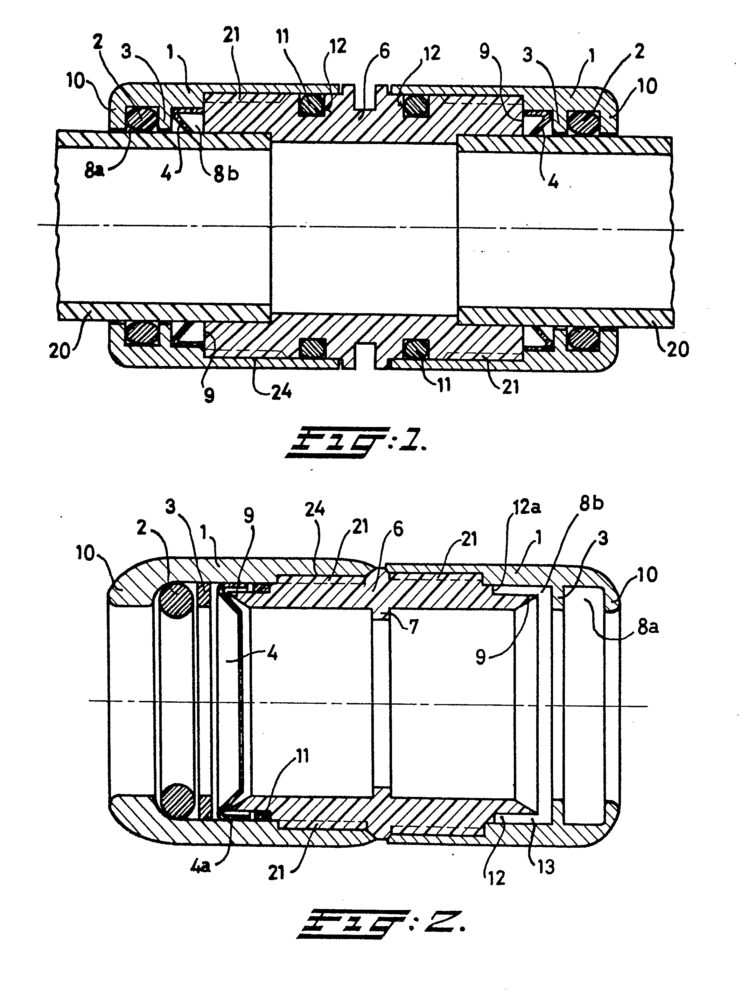

Fig. 1 shows a pipe connection comprising a double socket 6, the outer side of each end of same comprising an end cap 1, screwed upon the socket, which end cap 1 comprises a radial inwardly ex-

-4-

tending end part 10.

In between a circular inner collar 3 of end cap 1 and the radial inwardly extending end part 10 of the end cap, a chamber is provided for receiving an annular sealing member 2. Said annular sealing member engages the inner wall of the end cap 1 and the outer side of a male pipe part 20.

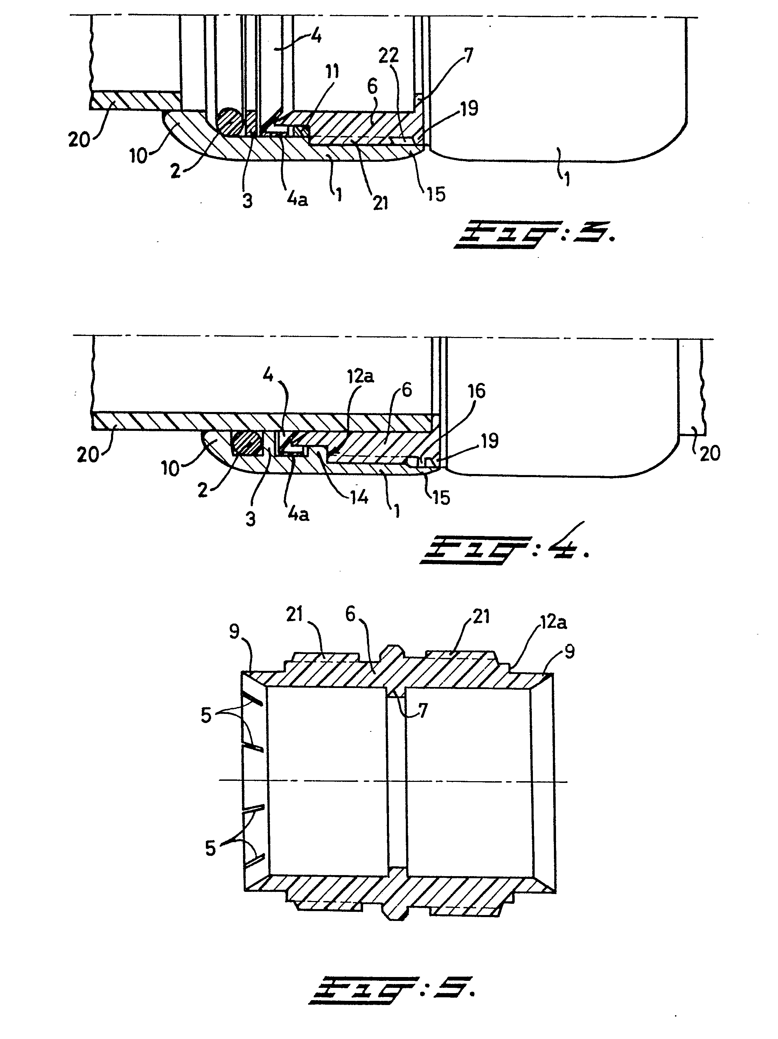

Instead of a circular inner collar 3, a loose partition or separating ring 3 as shown in fig. 4 can be used, in which embodiment both the inner collar 3 and the loose ring 3 may prevent any damages to the sealing ring for mounting the pipe connection.

Fig. 2 shows that an abutment edge 7 may also be provided in socket 6. In order to obtain an optimum seal a second annular chamber 12 may be provided at the outer side of the socket, said second chamber comprising a second annular sealing member 11.

The end cap 1 is connected to the outer side of the socket by means of a screw-thread-connection 21.

An annular tensile resistance providing coupling member 4 is situated in the space between the front end 9 of the socket and the circular inner collar 3 or circular loose partition ring 3, which coupling member 4 advantageously consists of a metal ring of a curved resilient material, comprising longitudinally extending slits so as to obtain an optimum tensile resistant coupling. Such a coupling member is, for instance, known from US-A-2 785 910.

The spaces 8a and 8b in front of the front end 9 of the socket and bounded by the radial inwardly extending end part 10 of the end cap, therefore comprise the annular sealing member and the annular coupling member 4, which are separated from each other by the separating ring or inner collar 3. This feature provides a considerable decrease of the outer dimensions of the pipe connection.

-5-

So as to keep the dimensions of the tensile resistant pipe connection as small as possible, an annular outer chamber 13, formed between the inner side of the end cap 1, and the outer side of the socket 6, adjoins the front end 9 of the socket 6, which annular outer chamber 13 may, in that event, comprise an annular part 4a of the annular coupling member 4.

In a preferred embodiment the annular outer chamber 13 may be integral with a second annular chamber 12 at the outer side of the socket, in which the abovementioned second annular sealing member 11 is enclosed.

In order to ensure an optimum seal between an end cap and the body of the socket, it may be preferable to provide the end cap with a deformable edge 15, which interacts with a circular shoulder 19 upon the outer side of the socket. In this case an annular recess 22 may be formed between the former deformable edge 15 and the outer side of the socket.

In the event that the end cap consists of metal and the socket of plastics, it may be recommended to improve the seal by applying a deformable collar 16 upon the outer wall of the socket, which seal then sealingly cooperates with the metal edge 15 which is in that case undeformable.

A metal end cap of this type may be provided with another shoulder 14 adjoining a chamber end wall 15a of chamber 12, in order to ensure an optimum seal with the addition of a plastics socket.6.

In fig. 5 it can be seen that the front end part of the socket is provided with longitudinally extending slits 5, giving the front socket end part a greater flexibility, in order to prevent any leakages.

A sealing foil 24 may be provided between a screwthread connection of the end cap 1 and the outer side of socket 6 in order to obtain

-6-

an optimum seal. The socket advantageously consists of thermoplastics, such as polyethylene or polypropylene, whereas the end cap may consist of  metal or plastics.

It  will be evident that the end cap 1 cannot only be connected with socket 6 by means  of screwing, but also by glueing, welding or snapping action.

From the  illustrated embodiments it appears  that the outer diameter of the end cap 1 is substantially equal to the greatest outer diameter of the socket 6.

Is  is observed that the reference numerals in the claims are not intended to restrict the scope thereof, but are only denoted for clarification.

-1-

CLAIMS

1. A tensile resistant pipe connection, at least comprising a socket, a male pipe part, an end cap possessing a radial inwardly extending end part, said end cap being connected to the socket, as well as an annular sealing member and an annular tensile resistance providing coupling member, the annular sealing member being nearer to the free end of the end cap than the coupling member., characterized in that the annular sealing member (2) and the annular tensile resistance providing coupling member (4) are situated in a space (8a, 8b) bounded by the front end (9) of the socket (6) and the radial inwardly extending end part (10) of the end cap (1).

2. A tensile resistant pipe connection according to claim 1, characterized in that the outer diameter of the end cap is substantially equal to the greatest outer diameter of the socket.

3. A tensile resistant pipe connection according to claim 1 or 2, characterized in that a second annular sealing member (11) is located in a second annular chamber (12) at the outer side of the socket (6).

4. A tensile resistant pipe connection according to claims 1-3, characterized in that an annular outer chamber (13) formed between the inner side of the end cap (1) and the outer side of the socket (6) adjoins the front end (9) of the socket (6) and preferably an annular part (4a) of the annular coupling member (4) is located in said annular chamber (13).

5. A tensile resistant pipe connection according to claims 1 to 4, characterized in that an annular outer chamber (13) and a second annular chamber (12) adjoin each other.

6. A tensile resistant pipe connection according to claim 5, characterized in that the end cap 1 is provided with another shoulder (14) adjoining the chamber end wall (12a) of the second

-2-

annular chamber (12).

7. A tensile resistant pipe connection according to claims 1-6, characterized in that an edge (15) of the end cap (1) engages a collar (16) at the outer side of the socket.

8. A tensile resistant pipe connection according to any one or more of the preceding claims, characterized in that the front end part (9) of the socket (6) is provided with preferably longitudinally extending slits (5).

9. A tensile resistant pipe connection according to any one or more of the preceding claims, characterized in that an edge (15) of the end cap (1) engages a collar (16) and/or a circular shoulder (19) which are each provided at the outer side of the socket (6).

10. A tensile resistant pipe connection according to any one or more of the preceding claims, characterized in that the socket consists of plastics and the end cap of metal or plastics.

11. A socket with an end cap, suitable for application in a pipe connection as claimed in any one or more of the preceding claims.

_Fig:1._

_Fig:2._

Fig: 3.

Fig: 4.

Fig: 5.